# NEUE EUROPÄISCHE PATENTSCHRIFT

(11) **EP 0 321 760 B2**
(45) Veröffentlichungstag und Bekanntmachung des Hinweises auf die Entscheidung über den Einspruch: **14.04.1999**
(45) Hinweis auf die Patenterteilung: 13.03.1991
(21) Anmeldenummer: 88120224.6
(22) Anmeldetag: 03.12.1988
(51) Int. Cl.: C08L 23/08, C08K 3/00

(54) **Homogene, mehrfarbig strukturierte Kunststoffbahn oder -platte sowie Verfahren zu deren Herstellung**
Homogeneous, multicoloured structured plastic film or panel, and process for its production
Films ou feuilles plastiques homogènes à structure polychrome et leur procédé de fabrication

(30) Priorität: 19.12.1987 DE 3743296; 19.12.1987 DE 3743297
(43) Veröffentlichungstag der Anmeldung: 28.06.1989
(73) Patentinhaber: HT TROPLAST AG, D-53839 Troisdorf (DE)
(72) Erfinder: Simon, Manfred, Dr., D-5216 Niederkassel (DE); Höver, Alexander, D-5210 Troisdorf-Spich (DE); Schulte, Herbert, D-5210 Troisdorf (DE); Becker, Josef, D-5206 Neunkirchen-Seelscheid 1 (DE); Weiss, Richard, Dr., D-5210 Troisdorf (DE); Kaseler, Hans-Joachim, Dr., D-5210 Troisdorf (DE)

(56) Entgegenhaltungen:
- EP-A- 227 029
- EP-A- 0 106 148
- EP-B- 46 526
- DE-A- 2 129 267
- DE-A- 3 306 776
- DE-A- 3 546 184
- DE-A- 3 546 215
- DE-C- 3 546 215
- FR-A- 2 035 670
- GB-A- 1 310 241
- US-A- 2 729 770
- US-A- 3 156 666
- US-A- 3 700 366
- US-A- 3 737 274
- US-A- 3 761 555
- US-A- 4 191 798
- US-A- 4 430 468
- US-A- 4 614 556
- US-A- 4 708 978
- Prospekt "Nipoflex" der Firma Nippon Polychemicals Co. Ltd.
- Ullmanns Encyclopädie der Techn. Chemie, 4. Aufl., Bd. 19, S. 176 u. 204
- Kunststoffe,Bd. 62 (1972) H. 2. S. 71-77
- Technical Service Note A119 "Alkathene" of ICI (1973)

## Beschreibung

Die Erfindung betrifft eine homogene, mehrfarbig strukturierte Kunststoffbahn oder -platte sowie ein Verfahren zu deren Herstellung.

Unter homogenen Kunststoffbahnen oder -platten im Sinne der vorliegenden Erfindung werden Flächengebilde verstanden, die einschichtig ausgebildet sind und deren physikalische Eigenschaften von der Oberseite bis zur Unterseite gleichbleibend (homogen) sind. Solche homogenen Kunststoffbahnen oder -platten werden insbesondere verwendet als Bodenbelag und ggf. auch als Wandverkleidung. Durch den homogenen Aufbau können diese Beläge auch bei starker Beanspruchung, insbesondere Abrieb, eingesetzt werden, da die optischen und physikalischen Eigenschaften der Oberfläche auch bei stärkerem Abrieb kaum verändert werden. Es sind auch nicht-homogene Bodenbeläge im Handel, die z.B. eine dünne Oberflächenbeschichtung aufweisen, also mehrschichtig aufgebaut sind. Nicht-homogene Bodenbeläge sind jedoch bezüglich ihrer Gebrauchseigenschaften den homogenen Belägen weit unterlegen.

Wesentliche Kriterien für die Qualität mehrfarbig strukturierter Kunststoffbahnen oder -platten sind das ästhetische Erscheinungsbild und das Verschleißverhalten.

Homogene, mehrfarbig strukturierte Kunststoffbahnen oder - platten sowie Verfahren zu ihrer Herstellung sind z.B. aus der DE-C-16 79 822 (=US-A-3,761,555), DE-C2-32 35 166 (=EP-C2-0 106 148), DE-C2-33 24 480, DE-A1-35 07 655 und EP-A2 0 227 029 bekannt, die sich jeweils mit der Herstellung mehrfarbig marmorierter, homogener Kunststoffbahnen aus thermoplastischem Kunststoff auf der Basis von PVC befassen.

Die Verschleißfestigkeit (Abriebfestigkeit) der bekannten homogenen Bodenbeläge hängt insbesondere von dem Füllstoffgehalt des bei der Herstellung verwendeten Ansatzes ab. Üblich sind Mischungen aus ca. 60 bis 80 Gew.-% weichmacherhaltigem PVC als Bindemittel, mit einem Weichmacheranteil von 40 bis 60 Gew.-%, sowie 20 bis 40 Gew.-% eines Füllstoffes wie z.B. Calciumcarbonat. Die Verschleißfestigkeit eines solchen Belages nach dem Stand der Technik steigt dabei mit steigendem Bindemittelgehalt (Kunststoffanteil) an. Ein zu hoher Bindemittelanteil verteuert das Produkt jedoch wesentlich. Bislang mußte daher immer ein Kompromiß zwischen ausreichender Verschleißfestigkeit und annehmbaren Warenrohstoffkosten gesucht werden.

In der gattungsgemäßen EP-A2-0 227 029 ist bereits die Verwendung von Ethylen-Vinylacetat-Copolymerisat (EVA) als Bindemittel für Bodenbeläge bekannt, wobei der EVA-Anteil im Gesamtansatz 69 Gew.-% betrug. Derartige Bahnen oder Platten weisen zwar eine hohe Verschleißfestigkeit auf, sind jedoch wegen ihres hohen Vinylacetat-Gehaltes (ca. 20 % auf den Gesamtansatz) oberhalb von ca. 80 °C klebrig und kaum zu verarbeiten. Darüber hinaus ist ein solcher Belag so weich, daß er nicht für Bodenbeläge einsetzbar ist.

Aus der DE-A1-32 41 395 (=US-A-4,455,344) ist ein Verfahren zur Herstellung eines insbesondere zum Spritzgießen verwendbaren, hochgefüllten Granulats aus 60 bis 90 % pulverförmigem Füllstoff sowie zwei unterschiedlichen, pulverförmigen, thermoplastischen Kunststoffen definierter Kornstruktur mit Anteilen von je 5 bis 35 % bekannt. Die unterschiedlichen Kunststoffpulver müssen unterschiedliche Schmelzpunkte aufweisen, da bei der Granulatherstellung nur eines der beiden Bindemittelkomponenten aufgeschmolzen wird. Bei diesem Verfahren entstehen inhomogene Granulate, in denen die höher schmelzende Komponente in kristalliner, körniger Struktur verteilt ist. Als niedrig-schmelzende Kornkomponente wird auch EVA erwähnt.

Bei allen bislang bekanntgewordenen Verfahren zur Herstellung mehrfarbig strukturierter Kunststoffbahnen oder -platten sind die Übergänge in der farblichen Strukturierung, insbesondere Marmorierung, nicht scharf begrenzt, sondern mehr oder weniger "verwaschen". Es war bislang nicht möglich, z.B. feinziselierte, ornamentale Strukturen zu erzeugen.

Aufgabe der vorliegenden Erfindung ist es, weichmacherfreie, mehrfarbig strukturierte, insbesondere marmorierte, homogene Kunststoffbahnen oder -platten mit gutem ästhetischen Erscheinungsbild, hoher Verschleißfestigkeit, bezogen auf das Verhältnis von Bindemittelgehalt zu Füllstoffgehalt, und bezüglich der physikalischen Eigenschaften den bekannten PVC-Belägen ebenbürtigen Eigenschaften zur Verfügung zu stellen.

Die Erfindung löst diese Aufgabe durch eine homogene, weichmacherfreie, mehrfarbig strukturierte Kunststoffbahn oder -platte gemäß Anspruch 1 und ein Verfahren gemäß Anspruch 7.

Es hat sich überraschend herausgestellt, daß die erfindungsgemäßen Kunststoffbahnen oder -platten gegenüber allen bekannten Belägen auf PVC-Basis weit überlegene physikalische Eigenschaften aufweisen. Insbesondere ist die Verschleißfestigkeit der erfindungsgemäß hergestellten Kunststoffbahnen und -platten im Vergleich zu vergleichbaren Produkten auf PVC-Basis um etwa 100 % besser bei gleichem Füllstoffgehalt des Ansatzes und gleicher Verfahrenstechnik beim Herstellungsprozeß. Darüber hinaus erlaubt der erfindungsgemäße Einsatz eines Bindemittels auf der Basis von Ethylen-Vinylacetat-Copolymerisat wesentlich höhere Füllstoffanteile im Gesamtansatz, als es bei Einsatz von weichmacherhaltigem PVC als Bindemittel - wie nach dem Stand der Technik üblich - möglich wäre.

Der überraschend mögliche Einsatz hoher Füllstoffanteile kompensiert etwa den höheren Preis von EVA gegenüber PVC, so daß der erfindungsgemäße Belag auch in preislicher Hinsicht gegenüber PVC-Belägen konkurrenzfähig ist.

Weiterhin hat sich überraschend herausgestellt, daß auch die optischen (ästhetischen) Eigenschaften der erfindungsgemäß hergestellten Kunststoffbahnen oder -platten den nach dem Stand der Technik bekannten wesentlich überlegen sind. Das erfindungsgemäße Verfahren erlaubt es erstmalig, mehrfarbig strukturierte und insbesondere marmorierte Beläge herzustellen, die eine scharfe Begrenzung der Farbübergänge bis in kleinste Details und keine "verwaschenen" Strukturen aufweisen.

Bei sonst gleicher Verfahrenstechnik weist ein Belag auf der Basis von weichmacherhaltigem PVC eher unklare Konturen in der Marmorierung auf, während ein erfindungsgemäß hergestellter Belag mit einem Bindemittel auf der Basis von Ethylen-Vinylacetat-Copolymerisat scharf abgegrenzte, feinziselierte Farbstrukturen aufweist.

Nach der vorliegenden Erfindung werden mehrere Ansätze, bestehend jeweils aus einem Bindemittel, bis zu 80 % eines Füllstof fes und bis zu 5 % einer Farbkomponente, in einem ersten Verfahrensschritt zu in sich einfarbigen Granulaten oder Chips verarbeitet. Einer der Ansätze kann dabei auch transparent eingestellt sein, also ohne Farbkomponente, während die übrigen Ansätze jeweils eine unterschiedliche Farbkomponente enthalten.

Als Füllstoffe können beispielsweise Kreide, Kaolin, Talkum, Holzmehl oder Quarzmehl eingesetzt werden. Zusätzlich können auch Verarbeitungshilfsmittel und Antistatika zugesetzt werden.

Das Bindemittel enthält Ethylen-Vinylacetat-Copolymerisat (EVA), wobei auch verschiedene EVA-Typen miteinander gemischt werden können, sowie Olefin-Homopolymerisat.

Bevorzugt werden EVA-Typen eingesetzt mit einem VinylacetatAnteil (VA-Anteil) von 14 bis 45 % des EVA-Anteils, wobei der VA-Anteil des Gesamtansatzes aus Bindemittel, Füllstoff, Farbkomponente und gegebenenfalls weiteren Hilfsstoffen 3 bis 14 Gew.-%, bevorzugt 5 bis 10 Gew.-%, und der Anteil des Bindemittels mindestens 20 Gew.-%, bevorzugt 25 bis 50 Gew.-% und insbesondere 25 bis 40 Gew.-% des Gesamtansatzes betragen sollte.

Insbesondere haben sich EVA-Typen mit einem VA-Anteil von 18 bis 40 Gew.-%, bezogen auf den EVA-Anteil, bewährt. Durch Einsatz von Mischungen verschiedener Ethylen-Vinylacetat-Copolymerisate mit unterschiedlichen Vinylacetat-Anteilen können die Materialeigenschaften des fertigen Belages, insbesondere bezüglich der Härte und des Verschleißverhaltens, beeinflußt werden, wobei höhere Vinylacetat-Anteile tendenziell zu weicheren und höhere Ethylen-Anteile im EVA-Copolymerisat zu härteren Kunststoffbahnen bzw. -platten führen.

Im Gegensatz zu PVC-Bodenbelägen handelt es sich bei dem erfin-dungsgemäßen Bindemittel um ein weichmacherfreies System, das trotzdem die Möglichkeit aufzeigt, je nach Acetatanteil im Copolymerisat bzw. Bindemittelcompound, eine Bandbreite von harter bis weicher Einstellung zu erzielen, ohne die Nachteile weichmacherhaltiger Ansätze in Kauf nehmen zu müssen.

Wesentliche Nachteile weichmacherhaltiger Bindemittel sind:
- Weichmacher migrieren in den Klebstoff, mit dem Boden- oder Wandbeläge verklebt werden und können dadurch die Haftung derartig verschlechtern, daß es bei Belastungen zu Blasenbildungen oder sogar durch Schrumpfung, Versprödung und Rißbildung zur Zerstörung eines Bodenbelags kommen kann.
- Weichmacher können ausschwitzen, wodurch ein Bodenbelag zum Schmutzfänger wird, dessen Säuberung ein Problem darstellt.
- Weichmacher stellen ein Kanalisationssystem für migrierende Farbstoffe dar. Derartig penetrierte Verfärbungen lassen sich nicht mehr entfernen.
- Weichmacher, besonders die weltweit verwendeten Phthalsäureester, an erster Stelle DOP (Di-2-ethylhexylphthalat), sind bis zu einem gewissen Grad flüchtig und können die Luft entsprechend belasten.

Ein weiterer wesentlicher Vorteil der erfindungsgemäßen Platten und Bahnen ist, daß ohne Zusatz von flüssigen Komponenten, wie sie bei Bodenbelägen als Weichmacher eingesetzt werden, ein sehr hoher Füllstoffanteil eingearbeitet werden kann, wobei die dabei erzielten Verschleißeigenschaften die von Weich-PVC-Bodenbelägen weit übertreffen.

Überraschenderweise wurde gefunden, daß die erfindungsgemäßen homogenen Kunststoffbahnen oder -platten mit EVA als Bindemittel hochwertige Gebrauchseigenschaften, insbesondere bei der Verwendung als Bodenbeläge, bei Füllstoffgehalten bis 80 Gew.-%, insbesondere aber bei Füllstoffgehalten von 50 bis 75 Gew.-%, aufweisen, während im Gegensatz hierzu Beläge auf Basis von Weich-PVC bei hochwertigen Eigenschaften nur Füllstoffgehalte bis maximal 40 Gew.-% enthalten können.

Da reines EVA-Copolymerisat bei den Verarbeitungstemperaturen sehr klebrig ist und daher nur schwer verarbeitet werden kann, wird eine Mischung aus Ethylen-Vinylacetat-Copolymerisat und Olefin-Homopolymerisates, ggf. unter Zusatz eines Olefin-Copolymerisates oder Olefin-Terpolymerisates, eingesetzt. Der Anteil des Olefin-Homopolymerisats beträgt 2 bis 15 Gew.-i des Gesamtansatzes.

Bevorzugt werden als Olefin-Homopolymerisate insbesondere Polyethylen und besonders bevorzugt Polypropylen eingesetzt. Mit einer Homo-Polyolefinkomponente als zweiter Komponente im Bindemittel, werden, trotz des gegebenenfalls nur geringen Anteils im Gesamtansatz, einerseits die Verarbeitungscharakteristiken entscheidend verbessert und andererseits überlegene Gebrauchseigenschaften erzielt. Völlig überraschend wird insbesondere die Klebrigkeit bei Verarbeitungstemperatur aufgehoben bzw. der Klebebeginn zu höheren Temperaturen verschoben. Die Temperatur, bei der ein bestimmter Ansatz einen Klebebeginn aufweist, wird durch folgende Messung ermittelt: ein ca. 2 mm dicker und 10 mm breiter Streifen einer durch Mischen, Plastifizieren und Abpressen hergestellten Platte des zu untersuchenden Ansatzes wird für 3 Minuten auf eine beheizte Koflerbank gelegt und abgezogen. Dabei wird die Temperatur ("Klebetemperatur") bestimmt, bei der der Teststreifen beginnt, an der Koflerbank zu haften.

Ein Ansatz, der z.B. aus 30 Gew.-% EVA mit einem VA-Gehalt von 28 Gew.-% und 69 Gew.-% Kreide sowie 1 Gew.-% Farbe besteht, weist eine "Klebetemperatur" von ca. 110 °C auf. Ein Ansatz aus 20 Gew.-% EVA (28 Gew.-% VA), 10 Gew.-% Polyethylen, 69 Gew.-% Kreide und 1 Gew.-% Farbe weist eine Klebetemperatur von ca. 135 °C und ein entsprechender Ansatz mit 27 Gew.-% EVA (28 Gew.-% VA) und 3 Gew.-% Polypropylen (Novolen 1300 E) eine Klebetemperatur von ca. 200 °C auf.

Bevorzugt weist die Klebetemperatur des Gesamtansatzes einen Wert > 160° C, insbesondere > 190° C auf.

Der Zusatz von Polyolefinen in geringen Mengenanteilen bedingt allerdings höhere Verarbeitungstemperaturen, die aber durch die höheren Klebetemperaturen bei weitem überkompensiert werden. Durch Zusatz des besonders bevorzugten Polypropylens zum EVA wird allerdings die Härte des fertigen Belages erhöht. Es wird daher nach einer bevorzugten Ausbildung der Erfindung vorgeschlagen, in geringen Mengen von etwa 1 bis 5 Gew.-%, bezogen auf den Bindemittelanteil, ein Ethylen-Propylen-Mischpolymerisat (EPM/EPDM) einzusetzen. Der geringe Anteil vom EPDM (bzw. EPM) gleicht dabei die Erhöhung der Härte durch den Polypropylenzusatz wieder aus, ohne einen negativen Einfluß auf die Verarbeitungsbedingungen (Klebetemperatur) zu haben.

Überraschend hat sich herausgestellt, daß eine Steigerung der Unempfindlichkeit gegenüber Verschmutzungen dadurch erreicht werden kann, daß ein Polyethylen-Homopolymerisat in geringen Mengen, bevorzugt 1 bis 5 Gew.-%, bezogen auf den Bindemittelanteil, eingesetzt wird. Schon sehr geringe PE-Anteile von weniger als 3 Gew.-%, bezogen auf den Bindemittelanteil, und weniger als 1 Gew.-%, bezogen auf den Gesamtansatz, verbessern das Verschmutzungsverhalten des erfindungsgemäßen Belages entscheidend.

Nach einer besonders bevorzugten Ausführung der Erfindung weist der Gesamtansatz 25 bis 35 Gew.-% Bindemittel, 61 bis 74 Gew.-% Füllstoff, 0 bis 2 Gew.-% Antistatikum, 0,1 bis 2 Gew.-% Farbe, 0 bis 0,5 Gew.-% Antioxidanz - zusammen 100 Gew.-% - auf, wobei das Bindemittel bevorzugt aus 70 bis 85 Gew.-% EVA, 10 bis 28 Gew.-% PP, 1 bis 5 Gew.-% EPDM und 0 bis 5 Gew.-% PE - zusammen 100 Gew.-% - besteht.

Weitere bevorzugte Ausführungen der Erfindung ergeben sich aus den Ansprüchen 2 bis 6.

Nach einer ersten bevorzugten Ausführungsform der Erfindung wird die Herstellung von zueinander verschiedenfarbigen, in sich jedoch einfarbigen Chips (erster Verfahrensschritt) auf einem handelsüblichen und dem Fachmann bekannten Walzwerk vorgenommen. Bevorzugt wird dabei zuerst die Bindemittel-Komponente aufgegeben und bei etwa 110 bis 150° C plastifiziert, insbesondere bei einer Temperatur von etwa 120 bis 130° C. Falls zusätzlich zu einem EVA-Copolymerist noch weitere EVA-Typen und/oder andere Bindemittel-Komponenten eingesetzt werden, werden diese in diesem Arbeitsgang gleichzeitig mit dem Olefin-Homopolymerisat homogen zu der thermoplastischen Bindemittelmasse verarbeitet. Auf das so plastifizierte Walzfell aus Bindemittel wird anschließend der Füllstoffanteil sowie ggf. die Farbkomponente und weitere Hilfsstoffe aufgegeben und gleichmäßig mit dem plastifizierten Bindemittel zu einem einfarbigen Walzfell geknetet, das anschließend, z.B. durch Mahlen, zerkleinert wird zu einfarbigen Chips. Mehrere Chargen jeweils einfarbiger, zueinander jedoch verschiedenfarbiger Chips werden anschließend gemischt (zweiter Verfahrensschritt) und weiterverarbeitet. Die einzelnen Chips weisen eine Dicke, entsprechend der Dicke des Walzfells, von ca. 0,5 bis 5 mm, bevorzugt 1,5 bis 3 mm auf bei einem mittleren Durchmesser von 2 bis 15 mm, bevorzugt 3 bis 10 mm.

Nach einer besonders bevorzugten Ausführungsform der Erfindung wird zur Erzeugung von zueinander verschiedenfarbigen, in sich jedoch einfarbigen Granulate (erster Verfahrensschritt) der Bindemittelanteil und der Füllstoffanteil sowie ggf. die Farbkomponente sowie weitere Hilfsmittel in einem handelsüblichen, dem Fachmann bekannten Mischer unterhalb der Erweichungstemperatur der eingesetzten Bindemittel, insbesondere bei Raumtemperatur, gleichmäßig gemischt. Diese Mischung wird anschließend einem handelsüblichen Granulierextruder zugeführt und unter vollständiger Plastifizierung zu in sich einfarbigen Granulaten verarbeitet. Die einzelnen Granulatkörner weisen mittlere Abmessungen von ca. 1 bis 10, bevorzugt 2 bis 8 und insbesondere 3 bis 5 mm auf. Mehrere Chargen jeweils einfarbiger, untereinander jedoch verschiedenfarbiger Chargen werden anschließend gemischt (zweiter Verfahrensschritt) und weiterverarbeitet.

Gegebenenfalls können auch Granulate und Chips gemäß den vorstehend erläuterten Verfahrensweisen miteinander gemischt und erfindungsgemäß weiterverarbeitet werden.

Die Mischung aus zueinander verschiedenfarbigen, in sich jedoch einfarbigen Chips und/oder Granulaten kann im einfachsten Fall direkt abgepreßt werden zu den Kunststoffbahnen oder -platten, wobei die Chips bzw. Granulate eine Temperatur aufweisen müssen, die etwa der Plastifizierungstemperatur der eingesetzten Bindemittel entspricht bzw. darüber liegt, um ein Verschweißen der Chips bzw. Granulate miteinander zu erreichen. Das Abpressen kann dabei entweder diskontinuierlich erfolgen, z.B. in Einzeloder Etagenpressen bei Drücken von 2 bis 200 bar, oder kontinuierlich durch Flächendruck von 2 bis 200 bar, beispielsweise in Doppelbandpressen, oder schließlich im Kalander- oder Walzenverfahren durch Verpressen im Walzenspalt.

Die nach dieser einfachsten Verfahrensvariante hergestellten Bodenbeläge o.ä. unterscheiden sich in ihrem optischen Erscheinungsbild wesentlich von ähnlich hergestellten Belägen auf PVC-Basis, insbesondere ist die farbliche Strukturierung zwischen den einzelnen, miteinander verschweißten Granulaten bzw. Chips wesentlich deutlicher und schärfer.

Bevorzugt wird jedoch vor dem Abpressen in zwischengeschalteten Verfahrensschritten aus der Mischung zueinander verschiedenfarbiger, in sich jedoch einfarbiger Granulate bzw. Chips eine mehrfarbig marmorierte Masse erzeugt, die unmittelbar zu den Kunststoffbahnen oder -platten geformt und abgepreßt werden kann oder zunächst zu in sich marmorierten Chips oder Granulaten verarbeitet werden kann, wonach diese in sich marmorierten Chips oder Granulate durch weitere Verfahrensmaßnahmen weiterverarbeitet werden zu den Kunststoffbahnen oder -platten.

Die zunächst in sich einfarbigen, untereinander verschiedenfarbigen Chips bzw. Granulate können nach einer ersten Verfahrensvariante auf einem an sich bekannten Walzwerk zu einem mehrfarbig marmorierten Walzfell verarbeitet werden. Die einzelnen Chips bzw. Granulate werden dabei plastifiziert, miteinander verschweißt und unvollständig (inhomogen) vermischt (geknetet), um den Marmorierungseffekt zu erzeugen. Das marmorierte Walzfell kann anschließend kontinuierlich oder diskontinuierlich abgepreßt werden, beispielsweise durch Etagenpressen, Walzwerke, Kalander, Doppelbandpressen o.ä. Bevorzugt wird das marmorierte Walzfell jedoch zerkleinert - z.B. durch eine Mühle - zu in sich marmorierten Chips, die anschließend weiterverarbeitet werden. Nach einer bevorzugten Ausführungsform der Erfindung werden die zunächst in sich einfarbigen, untereinander verschiedenfarbigen Chips bzw. Granulate miteinander vermischt und mittels eines Extruders plastifiziert und durch Scherbeanspruchung unvollständig miteinander vermischt (geknetet) zu einer mehrfarbig marmorierten Masse, die durch eine Düse gepreßt und granuliert wird zu in sich mehrfarbig marmorierten Granulaten, die anschließend weiterverarbeitet werden. Der Extruder muß dabei eine solche Schneckengeometrie aufweisen, daß eine zu starke Durchmischung bzw. Durchknetung der plastifizierten Masse vermieden wird; bevorzugt werden Einschnecken-Granulierextruder mit Schneckenlängen 8 bis 15 D eingesetzt.

Die wie vorstehend erzeugten, in sich marmorierten Chips oder Granulate werden anschließend - gegebenenfalls auch nach Mischung verschieden eingefärbter Chargen etc. - nochmals bis zur Plastifizierung erwärmt und abgepreßt zu mehrfarbig marmorierten Kunststoffbahnen oder -platten. Das Pressen erfolgt wiederum durch kontinuierliche oder diskontinuierliche Verfahren, beispielsweise durch Etagenpressen, Walzwerke, Kalander oder Doppelbandpressen. Besonders bevorzugt werden dabei Walzwerke mit strukturierten Walzen, wie sie in der DE-PS 32 35 166-C2 beschrieben sind, sowie insbesondere Doppelbandpressen gemäß der DE-OS 35 46 184-A1. Überraschend hat sich herausgestellt, daß beim Abpressen mittels einer Doppelbandpresse gemäß der DE-OS 35 46 184-A1 die Verschleißeigenschaften der so hergestellten Kunststoffbahnen nochmals wesentlich günstiger liegen als bei mit herkömmlichen Walzwerken verpreßten Bahnen.

Nach dem Abpressen können die Kunststoffbahnen bzw. -platten nach Bedarf nach an sich bekannten Verfahren weiterbehandelt werden. Hierzu gehören insbesondere Spalten, oberflächliches Schleifen, Polieren, Prägen, Tempern, Zuschneiden etc.

### Wege der Ausführung der Erfindung

Im folgenden wird die Erfindung anhand einiger Ausführungsbeispiele näher erläutert:
Beispiel 1 (entfällt)

### Beispiel 2

### Folgender Ansatz aus

- Bindemittel:: 22,5 Gew.-% EVA mit 28 Gew.-% VA-Anteil (Riblene D JV 1055X, Fa. Enichem)
7,5 Gew.-% Polypropylen (Novolen 1300E, Fa. BASF)
- Füllstoff:: 48 Gew.-% Kreide (Calcilit 8, Fa. Alpha)
20 Gew.-% Kaolin (Typ RC 32, Fa. Sachtleben)
- Farbe:: 1 Gew.-%
- Gleitmittel:: 1 Gew.-% Calciumstearat (Ceasit I, Fa. Bärlocher)
wurde in einem Papenmeier-Schnellmischer 3 Minuten bei Raumtemperatur gemischt und kontinuierlich in einen Doppelschnecken-Extruder Reifenhäuser BT 55 eingefüllt, plastifiziert und über eine Lochplatte mit 3,5 mm Lochdurchmesser und rotierendem Messer granuliert.

Die Temperaturen betrugen:

| Zone 1 | Zone 2 | Zone 3 | Zone 4 | Zone 5 |
|---|---|---|---|---|
| 140 °C | 140 °C | 160 °C | 160 °C | 160 °C |

| Zone 6 | Zone 7 | Zone 8 | Zone 9 | Zone 10 |
|---|---|---|---|---|
| 160 °C | 140 °C | 140 °C | 145 °C | 155 °C |

Schneckendrehzahl [U/min]: 50
Der Durchsatz betrug 75 [kg/h]

Das nach diesem Beispiel in vier verschiedenen Farben herge- stellte Granulat wurde gemischt und in eine 2 mm starke Form gefüllt und wie folgt verpreßt:

| | |
|---|---|
| Druck | 100 bar |
| Temperatur | 150 °C |
| Preßzeit | 5 Minuten |

Die in strenger Linienführung strukturierte vierfarbige Platte hatte folgende Eigenschaften:

| | |
|---|---|
| Dicke [mm] | 2,028 |
| Rohdichte [g cm⁻³] | 1,715 |
| Shore-C-Härte nach DIN 53505 (Apr.1967) | 83,3 (10 s) |
| Verschleißprüfung nach DIN 51963-A (Okt.1980): Gewichtsverlust [g] | 6,647 |
| Dickenverlust [mm] | 0,26 |

### Beispiel 3

Die entsprechend dem Beispiel 2 hergestellten vier unterschiedlich eingefärbten Granulate wurden gemischt und auf einem Walzwerk bei einer Temperatur von 180° C zu einem marmorierten Rohfell verarbeitet, wobei die Granulate im Walzenspalt durch Scherbeanspruchung miteinander verschweißt und unvollständig durchmischt wurden. Anschließend wurde das Rohfell zu einer Platte unter folgenden Bedingungen abgepreßt:

| | |
|---|---|
| Druck | 110 bar |
| Temperatur | 160 °C |
| Preßzeit | 2 Minuten |

Man erhielt eine fein strukturierte, mehrfarbige Platte mit marmorartigem Aussehen und folgenden physikalischen Eigenschaften:

| | |
|---|---|
| Dicke [mm] | 2,047 |
| Rohdichte [g cm⁻³] | 1,738 |
| Shore-C-Härte nach DIN 53505 (Apr.1967) | 77,3 (10 s) |
| Verschleißprüfung nach DIN 51963-A (Dez.1980) Gewichtsverlust [g] | 5,15 |
| Dickenverlust [mm] | 0,20 |

### Beispiel 4

Entsprechend Beispiel 2 wurden vier Chargen unterschiedlich eingefärbter Granulate hergestellt und in folgendem Verhältnis gemischt

| | | | |
|---|---|---|---|
| weiß | 40 Gew.-% | beige | 40 Gew.-% |
| grau | 20 Gew.-% | braun | 20 Gew.-% |

Diese Granulat-Mischung wurde in einem Einschnecken-Extruder mit einem Schneckendurchmesser D von 42 mm, Länge 12 D, durch eine Lochscheibe mit einem Lochdurchmesser von 2,7 mm gepreßt und granuliert. Die eingefüllten Granulate wurden dabei plastifiziert, miteinander verschweißt und unvollständig durch die Scherkräfte gemischt (geknetet), so daß die einzelnen Farben erhalten blieben, die einzelne Granulate aber verschmolzen wurden zu einer marmorierten Masse, die anschließend wiederum granuliert wurde zu in sich marmorierten Granulaten.

| Die Extrusionbedingungen waren: | |
|---|---|
| Schneckenumdrehungsgeschwindigkeit | 60 U/Minute |
| Temperatur | 145 °C |
| Schneidmesser | 1200 U/Minute |

Das noch heiße, in sich marmorierte Granulat wurde über ein Transportsystem und eine Schüttvorrichtung zu einer Schicht mit weitgehender konstanter Schütthöhe geschüttet. Die Formstückschicht wurde vorgewärmt mit Infrarot-Strahlern und unter Wärme und Druck in einer kontinuierlich arbeitenden Doppelbandpresse gemäß der DE-OS 35 46 184-A1 verdichtet. Die Temperatur der Heiztrommel betrug 180 °C. Die zweite Hälfte der Presse wurde gekühlt und die ca. 5 mm starke abgekühlte Bahn mittig kontinuierlich gespalten und jeweils beidseitig geschliffen, wobei die Oberseite mit einem Schleifband mit 100er Korn und die Unterseite mit einem Schleifband mit 50er Korn auf eine Endstärke von 2,2 mm gebracht wurde. Der entstehende Schleifstaub kann ggf. gemäß Beispiel 10 wiederverwendet werden.

Die so kalibrierte Bahnenware kann ggf. zu Platten geschnitten oder auch mit zusätzlicher Oberflächenprägung bzw. -glättung weiterverarbeitet werden.

Es entstanden Platten und Bahnen mit fein ziselierten, ornamentartigen, klar umrissenen, mehrfarbigen Strukturierungen.

Eine zusätzliche Prägung bzw. Glättung kann beispielsweise erfolgen durch Erwärmen der geschliffenen Bahn auf ca. 100 °C und anschließendes Prägen in einem Prägewerk mit verchromten Walzen (Rauhtiefe 7 µm).

Aus der geschliffenen Bahn können auch Platten gestanzt und in einer Presse unter folgenden Bedingungen geprägt werden:

| | |
|---|---|
| Druck | 100 bar |
| Temperatur | 120 °C |
| Preßzeit | 15 Minuten |

| Die physikalischen Eigenschaften waren (nach dem Kalibrieren): | |
|---|---|
| Dicke [mm] | 2,027 |
| Rohdichte [g cm⁻³] | 1,710 |
| Shore-C-Härte nach DIN 53505 (Apr.1967) Verschleißprüfung nach DIN 51963-A (Dez.1980): | 77,0 |
| Gewichtsverlust [g] | 3,5 |
| Dickenverlust [mm] | 0,14 |

Besonders bemerkenswert sind bei dieser Verfahrensweise die gegenüber dem Beispiel 3 nochmals wesentlich verbesserten Verschleißeigenschaften trotz Verwendung eines gleichen Ansatzes.

### Beispiel 5 (entfällt)

### Beispiel 6

Ein Ansatz gemäß Beispiel 2 wurde in einem Henschelmischer 3 Minuten bei Raumtemperatur gemischt und kontinuierlich über Zellenradschleuse und Dosiervorrichtung (Förderschnecke) in einem Werner & Pfleiderer-Extruder Kombiplast, bestehend aus einer Doppelschnecke ZDSK mit Förder- und Knetzonen und einer Einfachaustragsschnecke AES mit Lochscheibe (Bohrungen 3,5 mm) und rotierendem Schneidmesser, zu Granulat verarbeitet.

Die Verfahrensbedingen waren:

| Doppelschnecke ZDSK 300 U/Minute | | | | | |
|---|---|---|---|---|---|
| Temperaturen | | | | | |
| Zone 1 | Zone 2 | Zone 3 | Zone 4 | Zone 5 | Zone 6 |
| 180 °C | 180 °C | 100 °C | 140 °C | 140 °C | 180 °C |

Die so in vier verschiedenen Farben hergestellten Granulate wurden entsprechend Beispiel 4 weiterverarbeitet.

Es wurden fein strukturierte Dessinierungen erhalten.

### Beispiel 7

Ein Ansatz gemäß Beispiel 2 wurde mit 3 Gew.-% eines Antistatikums (Natriumalkylsulfonat, Typ Lankrostat DP 6337, Fa. Lankro) vermischt und entsprechend den Beispielen 2 und 4 verarbeitet. Neben den aus den übrigen Beispielen bekannten physikalischen Eigenschaften hatte dieser Ansatz einen Ableitwiderstand nach DIN 51953 von 2,8 x 10⁶ Ohm. Es ließ sich auf dieser Basis ein leitfähiger Bodenbelag herstellen.

### Beispiel 8

Der entsprechend dem Beispiel 6 zu Granulat verarbeitete Ansatz gemäß Beispiel 2 wurde in 4 Farben gefertigt, diese in einem Gewichtsverhältnis von 4:4:1:1 gemischt und entsprechend dem Beispiel 4 in einem Einschneckenextruder zu marmorierten Granulaten granuliert.

| | |
|---|---|
| Die Extrusionsbedingungen waren Schneckenumdrehungszahl | 60 U/min |
| Temperatur | 125 bis 130 °C |
| Durchsatz | 40 kg/h |
| Schneidmesserumdrehungszahl | 1200 U/min |

Das noch heiße, marmorierte Granulat wurde über ein Transportsystem in ein Walzwerk, entsprechend der DE-PS 32 35 166 C2, mit gerändelten Walzen gefüllt, das folgende Charakteristika aufwies: Das Zweiwalzenwerk ist besonders profiliert und erlaubt es, ein kompaktes, homogenes Walzfell ohne weitere Nachbehandlung in 2 bis 3 mm Stärke mit Oberflächenprofilierung zu erzeugen. Die Strukturierung der Walzenoberfläche besteht im einzelnen aus z.B. stumpfen Pyramiden, die spiralförmig ein Pyramidennetz auf der Walzenoberfläche bilden. Die Oberflächenstruktur kann aber auch zylindrisch, rechteckig, quadratisch oder rhombenförmig sein. Es entsteht eine weitgehend richtungsfreie Dessinierung.

Die so erhaltene Bahn wurde einseitig auf 2,1 bis 2,2 mm geschliffen und in einer Presse bei 140 °C, 100 bar in 30 min. mit einer glatten Oberfläche geprägt. Die geschliffene Bahnenware ließ sich ebenfalls über eine Band- und/oder Walzenprägung glätten. Man erhielt im Vergleich zu einem PVC-Ansatz eine feinstrukturierte und körnige Dessinierung, wohingegen die Strukturen bei Weich-PVC sehr grob- und größerflächig ausfallen.

Die physikalischen Eigenschaften waren:

| Eigenschaften | |
|---|---|
| Dicke [mm] | 2,027 |
| Rohdichte [g cm⁻³] | 1,710 |
| Shore-C-Härte nach DIN 53505 (Apr.1967) Verschleißprüfung nach DIN 51963-A (Dez.1980): | 72,0 |
| Gewichtsverlust [g] | 4,5 |
| Dickenverlust [mm] | 0,18 |

### Beispiel 9

Das noch heiße, marmorierte Granulat entsprechend Beispiel 8 wurde über ein Transportsystem und eine Schüttvorrichtung zu einer Schicht mit weitgehender konstanter Schütthöhe geschüttet. Die Formstückschicht wurde vorgewärmt mit Infrarot-Strahlern und unter Wärme und Druck in einer kontinuierlich arbeitenden Doppelbandpresse gemäß der DE-OS 35 46 184-A1 verdichtet. Die Temperatur der Heiztrommel betrug 180 °C. Die zweite Hälfte der Presse wurde gekühlt und die ca. 5 mm starke abgekühlte Bahn mittig kontinuierlich gespalten und jeweils beidseitig geschliffen, wobei die Oberseite mit einem Schleifband mit 100er Korn und die Unterseite mit einem Schleifband mit 50er Korn auf eine Endstärke von 2,2 mm gebracht wurde.

| Die physikalischen Eigenschaften waren | |
|---|---|
| Dicke [mm] | 2,200 |
| Rohdichte [g cm⁻³] | 1,710 |
| Shore-C-Härte nach DIN 53505 (Apr.1967) Verschleißprüfung nach DIN 51963-A (Dez.1980): | 77,0 |
| Gewichtsverlust [g] | 3,4 |
| Dickenverlust [mm] | 0,13 |

Ein Vergleich der Beispiele 8 und 9 zeigt, daß das abschließende Abpressen der Granulat-Mischung einen entscheidenden Einfluß auf die Verschleißfestigkeit der Kunststoffbahnen hat: Während die mittels eines profilierten Walzenpaares hergestellte Bahn einen Dickenverlust von 0,18 mm bei der Verschleißprüfung nach DIN 51963-A (Dez.1980) aufwies, betrug der entsprechende Meßwert nach Beispiel 9 0,13 mm. Zu bemerken ist dabei, daß die Bahn nach Beispiel 8 immer noch wesentlich bessere Verschleißeigenschaften aufweist als herkömmliche Bahnen auf PVC-Basis mit gleichem Füllstoffanteil.

### Beispiel 10

Entsprechend Beispiel 2 wurden vier Chargen unterschiedlich eingefärbter Granulate hergestellt und in folgendem Verhältnis gemischt

| | | | |
|---|---|---|---|
| weiß | 40 Gew.-% | beige | 40 Gew.-% |
| grau | 20 Gew.-% | braun | 20 Gew.-% |

Diese Granulat-Mischung wurde mit 20 Gew.-% eines Schleifstaubes, wie er gemäß Beispiel 4 erhalten wurde, gemischt und in einem Einschnecken-Extruder mit einem Schneckendurchmesser D von 42 mm, Länge 12 D, durch eine Lochscheibe mit einem Lochdurchmesser von 2,7 mm gepreßt und granuliert.

Zusätzlich zu den so hergestellten marmorierten Granulaten wurde ein Randbeschnitt von Bahnenware gemäß Beispiel 4 mit einer Condux-Schneidmühle Typ CS 300/400 N 2 mit 14 mm Sieb zu Chips vermahlen, mit einem Anteil von 25 Gew.-% untergemischt sowie mit einem Rändelwalzwerk nach Beispiel 8 weiterverarbeitet. Im Gegensatz zu PVC-Materialien, bei denen der Zusatz von Regenerat-Material zu gravierenden optischen Veränderungen der fertigen Kunststoffbahnen führt, wiesen die Bahnen gemäß Beispiel 10 die gleiche farbliche Struktur auf wie ohne Regeneratanteil gefertigte Bahnen.

Um die überlegenen physikalischen Eigenschaften des erfindungsgemäßen Verfahrens zu verdeutlichen, wurden Vergleichsversuche mit verschiedenen Ansätzen gemacht, wobei in der nachfolgenden Tabelle jeweils ein Ansatz auf Basis EVA mit Polypropylenbeimischung als Bindemittel einem solchen auf Basis Weich-PVC gegenübergestellt ist. Die Verschleißwerte wurden nach DIN 51963-A (Dez.1980) als Dickenverlust bestimmt. Die Füllstoffe und die Verfahrensweise wurden für alle Versuche gemäß Beispiel 3 gewählt, lediglich der Bindemittelanteil wurde von 25 Gew.-% bis 97 Gew.-% variiert. Beim Weich-PVC-Ansatz konnten Füllstoffanteile über ca. 60 Gew.-% nicht realisiert werden. Die Ergebnisse sind in Tabelle 1 wiedergegeben.

Die Tabelle 1 zeigt die um durchschnittlich 100 % höhere Verschleißfestigkeit des erfindungsgemäßen Belages gegenüber einem nach gleichem Verfahren hergestellten Weich-PVC-Belag mit jeweils gleichem Füllstoffanteil.

**Tabelle 1**

| Ansatz | | Verschleißeigenschaft (Dickenverlust) | |
|---|---|---|---|
| Bindemittel Masse-% | Füllstoff** Masse-% | EVA* [mm] | Weich-PVC [mm] |
| 25 | 75 | 0,27 | nicht realisierbar |
| 30 | 70 | 0,20 | nicht realisierbar |
| 45 | 55 | 0,105 | 0,21 bis 0,26 |
| 50 | 50 | 0,09 | 0,18 |
| 60 | 40 | 0,065 | 0,135 |
| 64 | 36 | 0,06 | 0,125 |
| 70 | 30 | 0,05 | 0,11 |
| 80 | 20 | ./. | 0,09 |
| 97 | 3 | ./. | 0,07 |

| | | | |
|---|---|---|---|
| * 75 Gew.-% % EVA (mit 28 Gew.-% VA-Anteil) und 25 Gew.-% Polypropylen (Novolen 1300 E, Fa. BASF) | | | |
| ** 70 Gew.-% Kreide (Calcilit 8) und 30 Gew.-% Kaolin | | | |

In der Tabelle 2 sind schließlich die Ausführungsbeispiele 22 bis 25 gegenübergestellt, um den Einfluß der erfindungsgemäß eingesetzten Polyolefine als Zusatz zum Bindemittel zu erläutern. Es werden diejenigen Polyolefine und bevorzugt Polypropylene eingesetzt, die die Klebetemperatur des Gesamtansatzes erhöhen, bevorzugt auf Temperaturen > 190° C.

**Tabelle 2**

| Beispiel | Ansatz | Shore-C-Härte DIN 53505 (Apr.1967) | Verschleißpr. DIN 51963-A Dickenverlust [mm] | Klebebeginn Koflerbank [°C] |
|---|---|---|---|---|
| 22 | 30 Gew.-% EVA (28%VA) | (Vergleichsbeispiel) | | |
| | 51 Gew.-% Kreide | 76 | 0,23 | 100 |
| | 1 Gew.-% Calcium-stearat | | | |
| | 1 Gew.-% Farbe | | | |
| 23 | 20 Gew.-% EVA (28%VA) | | | |
| | 10 Gew.-% Polyethylen* 69 Gew.-% Kreide | 81 | 0,25 | 137 |
| | 1 Gew.-% Farbe | | | |
| 24 | 27 Gew.-% EVA (28%VA) | | | |
| | 3 Gew.-% Polypropylen** | | | |
| | 48 Gew.-% Kreide | | | |
| | 20 Gew.-% Kaolin | 79 | 0,20 | 200 |
| | 1 Gew.-% Calciumstearat | | | |
| | 1 Gew.-% Farbe | | | |
| 25 | 22,5 Gew.-% EVA (28%VA) | | | |
| | 7,5 Gew.-% Polypropylen** | | | |
| | 48 Gew.-% Kreide | | | |
| | 20 Gew.-% Kaolin | 80 | 0,20 | > 200 |
| | 1 Gew.-% Calciumstearat | | | |
| | 1 Gew.-% Farbe | | | |

| | | | | |
|---|---|---|---|---|
| * PE: Lupolen 1800 S, Fa. BASF | | | | |
| ** PP: Novolen 1300 E, Fa. BASF | | | | |

### Bester Weg zur Ausführung der Erfindung

Ein Ansatz, bestehend aus
I) 31,8 Gew.-% Bindemittel, bestehend aus
   a) 76,7 Gew.-% EVA mit 28 Gew.-% VA-Anteil (Riblene DJV 1055X, Fa. Enichem),
   b) 18,9 Gew.-% Polypropylen (Novolen 1300 E, Fa. BASF),
   c) 2,5Gew.-% EPDM (Buna AP 437, Fa. Hüls AG),
   d) 1,9 Gew.-% PE (Baylon 23 L 100, Fa. Bayer AG) [Anteile a bis d bezogen auf das Bindemittel]
II) 47,3 Gew.-% Kreide (Calcilit 8, Fa. ALPHA)
III) 18,5 Gew.-% Kaolin (Typ RC 32 K, Fa. Sachtleben),
IV) 1,3 Gew.-% Antistatikum (Lankrostat),
V) 1 Gew.-% Farbe,
VI) 0,1 Gew.-% Antioxidanz (Irganox 1010)
wurde entsprechend Beispiel 2 zu vier Chargen jeweils einfarbiger Granulate verarbeitet, die entsprechend Beispiel 8 zu einer Bahnenware weiterverarbeitet wurden.

Die physikalischen Eigenschaften waren:

| | |
|---|---|
| Dicke [mm] | 2,047 |
| Rohdichte [g cm⁻³] | 1,738 |
| Shore-C-Härte nach DIN 53505 (Apr. 1967) Verschleißprüfung nach DIN 51963-A (Dez.1980): | 80,0 (10 s) |
| Gewichtsverlust [g] | 3,5 |
| Dickenverlust [mm] | 0,14 |
| Dornbiegeversuch nach DIN 51949 (längs + quer) | 15 |
| Ableitwiderstand nach DIN 51953 | 3.10⁸-1.10⁹Ohm |

Der Ansatz wies eine hohe Klebetemperatur von > 200 °C auf und ließ sich einwandfrei verarbeiten. Die Bahnenware zeichnete sich durch besonders gute Temperaturbeständigkeit, hohe Zähigkeit und Flexibilität, sehr gute Oberflächeneigenschaften mit geringer Anschmutzbarkeit und antistatisches Verhalten aus.

Bei den in den Beispielen aufgeführten Handelsbezeichnungen Escorene, Juraperle, Riblene, Novolen, Calcilit, Ceasit, Hostalub, Lankrostat, Lupolen, Buna, Baylon und Irganox handelt es sich ggf. um eingetragene Warenzeichen.

## Patentansprüche

1. Homogene, weichmacherfreie, mehrfarbig strukturierte Kunststoffbahn oder -platte auf der Basis von Ethylen-Vinylacetat-Copolymerisat sowie Olefin-Homopolymerisat als polymerem Bindemittel mit Gehalten von Füllstoffen und ggf. Hilfsstoffen, **wobei** der Vinylacetatanteil im Gesamtansatz der Kunststoffbahn oder -platte 3 bis 14 Gew.-%, der Olefin-Homopolymerisatanteil im Gesamtansatz 2 bis 15 Gew.-% und der Anteil der Füllstoffe einschließlich der Hilfsstoffe 35 bis 80 Gew.-% des Gesamtansatzes betragen.

2. Kunststoffbahn oder -platte nach Anspruch 1, **dadurch gekennzeichnet,** daß als Olefin-Homopolymerisat ein Polypropylen und/oder ein Polyethylen enthalten ist.

3. Kunststoffbahn oder -platte nach Anspruch 2, **gekennzeichnet durch** einen Polypropylengehalt von 2 bis 15 Gew.-%, bezogen auf den Gesamtansatz, sowie einen Gehalt an EPDM und/oder EPM von 1 bis 5 Gew.-%, bezogen auf den Bindemittelanteil.

4. Kunststoffbahn oder -platte nach Anspruch 3, **dadurch gekennzeichnet,** daß ein solches Polypropylen verwendet wird, das die Klebetemperatur des Gesamtansatzes auf eine Temperatur > 160 °C und insbesondere > 190 °C heraufsetzt.

5. Kunststoffbahn oder -platte nach Anspruch 4, **dadurch gekennzeichnet,** daß das Bindemittel aus
a) 70 bis 85 Gew.-% EVA,
b) 10 bis 28 Gew.-% PP,
c) 1 bis 5 Gew.-% EPDM und
d) 0 bis 5 Gew.-% PE
- zusammen 100 Gew.-%-
und der Gesamtansatz aus
I) 25 bis 35 Gew.-% Bindemittel,
II) 61 bis 74 Gew.-% Füllstoff,
III) 0 bis 2 Gew.-% Antistatikum,
IV) 0,1 bis 2 Gew.-% Farbe,
V) 0 bis 0,5 Gew.-% Antioxidanz
- zusammen 100 Gew.-% - besteht.

6. Kunststoffbahn oder -platte nach einem der Ansprüche 1 bis 5, **dadurch gekennzeichnet,** daß der Vinylacetat-Gehalt 14 bis 45 Gew.-% des EVA-Anteils beträgt.

7. Verfahren zur Herstellung von mehrfarbig strukturierten, homogenen Kunststoffbahnen oder -platten nach Anspruch 1, bei dem mehrere jeweils einfarbig eingefärbte Ansätze auf der Basis thermoplastischer Kunststoffe zu zueinander verschiedenfarbigen Granulaten bzw. Chips verarbeitet werden, die miteinander vermischt und - ggf. nach weiteren Verfahrensschritten - abgepreßt werden zu den Kunststoffbahnen oder -platten, **dadurch gekennzeichnet,** daß die einzelnen zueinander verschiedenfarbigen Granulate bzw. Chips erhalten werden durch gleichmäßiges Mischen, vorheriges, gleichzeitiges oder anschließendes vollständiges Plastifizieren und anschließendes Granulieren bzw. Zerkleinern eines Ansatzes, enthaltend
- 20 bis 65 Gew.-% eines Bindemittels, welches Ethylen-Vinylacetat-Copolymerisat sowie ein Olefin-Homopolymerisat enthält,
- 35 bis 80 Gew.-% Füllstoffe sowie ggf. Hilfsstoffe und
- bis zu 5 Gew.-% einer Farbkomponente,
wobei der Vinylacetatanteil des Gesamtansatzes 3 bis 14 Gew.-% und der Olefin-Homopolymerisatanteil im Gesamtansatz 2 bis 15 Gew.-% betragen.

8. Verfahren nach Anspruch 7, **dadurch gekennzeichnet,** daß die Ansätze, enthaltend Bindemittel, Füllstoffe und eine Farbkomponente, auf einem Walzwerk vollständig plastifiziert und gemischt sowie anschließend zerkleinert werden zu den einzelnen zueinander verschiedenfarbigen Chips.

9. Verfahren nach Anspruch 7, **dadurch gekennzeichnet,** daß die Ansätze aus Bindemittel, Füllstoffen und der Farbkomponente mittels einer Mischeinrichtung bei einer Temperatur unterhalb der Erweichungstemperatur der eingesetzten Bindemittel gleichmäßig gemischt und anschließend in einem Extruder vollständig plastifiziert werden zu den einzelnen, zueinander verschiedenfarbigen Granulaten.

10. Verfahren nach einem der Ansprüche 7 bis 9, **dadurch gekennzeichnet,** daß die miteinander vermischten, zueinander verschiedenfarbigen Granulate bzw. Chips plastifiziert und durch Scherbeanspruchung unvollständig miteinander vermischt werden zu einer mehrfarbig marmorierten Masse, und daß diese mehrfarbig marmorierte Masse anschließend - ggf. nach weiteren Verfahrensschritten - geformt und abgepreßt wird zu marmorierten, homogenen Kunststoffbahnen oder -platten.

11. Verfahren nach einem der Ansprüche 7 bis 9, **dadurch gekennzeichnet,** daß die miteinander vermischten, zueinander verschiedenfarbigen Granulate oder Chips mittels eines Extruders plastifiziert und durch Scherbeanspruchung unvollständig miteinander vermischt werden zu einer mehrfarbig marmorierten Masse, die durch eine Düse gepreßt und granuliert wird zu in sich mehrfarbig marmorierten Granulaten, die anschließend - gegebenenfalls nach weiteren Verfahrensschritten - abgepreßt werden zu marmorierten, homogenen Kunststoffbahnen oder -platten.

12. Verfahren nach einem der Ansprüche 7 bis 9, **dadurch gekennzeichnet,** daß die miteinander vermischten, zueinander verschiedenfarbigen Granulate oder Chips auf einem Walzwerk plastifiziert und durch Scherbeanspruchung unvollständig miteinander vermischt werden zu einem mehrfarbig marmorierten Walzfell, das anschließend abgepreßt wird zu marmorierten, homogenen Kunststoffbahnen oder -platten.

13. Verfahren nach einem der Ansprüche 7 bis 9, **dadurch gekennzeichnet,** daß die miteinander vermischten, zueinander verschiedenfarbigen Granulate oder Chips auf einem Walzwerk plastifiziert und durch Scherbeanspruchung unvollständig miteinander vermischt werden zu einem mehrfarbig marmorierten Walzfell und daß dieses Walzfell anschließend zerkleinert wird zu in sich mehrfarbig marmorierten Chips, die anschließend weiterverarbeitet werden zu marmorierten, homogenen Kunststoffbahnen oder -platten.

14. Verfahren nach einem der Ansprüche 7 bis 9, **dadurch gekennzeichnet,** daß das Bindemittel wenigstens 50 Gew.-% Ethylen-Vinylacetat-Copolymerisat enthält.

15. Verfahren nach einem der Ansprüche 7 bis 9, **dadurch gekennzeichnet,** daß als Füllstoff Kreide und/oder Kaolin eingesetzt wird.

16. Verfahren nach Anspruch 11, **dadurch gekennzeichnet**, daß die mehrfarbig marmorierten Granulate mittels eines Rändelwalzwerkes abgepreßt werden zu den marmorierten, homogenen Kunststoffbahnen.

17. Verfahren nach Anspruch 11, **dadurch gekennzeichnet,** daß die mehrfarbig marmorierten Granulate mittels einer Doppelbandpresse abgepreßt werden zu den marmorierten, homogenen Kunststoffbahnen.

18. Verfahren nach Anspruch 13, **dadurch gekennzeichnet,** daß die mehrfarbig marmorierten Chips mittels eines Rändelwalzwerkes abgepreßt werden zu den marmorierten, homogenen Kunststoffbahnen.

19. Verfahren nach Anspruch 13, **dadurch gekennzeichnet,** daß die mehrfarbig marmorierten Chips mittels einer Doppelbandpresse abgepreßt werden zu den marmorierten, homogenen Kunststoffbahnen.

## Claims

1. Homogeneous, plasticizer-free, multicolorstructured synthetic resin sheet or panel based on ethylene-vinyl acetate copolymer and an olefin homopolymer as the polymeric binder, with contents of fillers and optionally auxiliary agents, wherein the vinyl acetate proportion in the total batch of the synthetic resin sheet or panel is 3 to 14% by weight, the olefin homopolymer proportion in the total batch is 2 to 15% by weight, and the proportion of the fillers including the auxiliary agents is 35 to 80% by weight of the total batch.

2. Synthetic resin sheet or panel according to claim 1, characterized in that there is contained as the olefin homopolymer a polypropylene and/or a polyethylene.

3. Synthetic resin sheet or panel according to claim 2, characterized by a polypropylene content of 2 to 15% by weight with respect to the total batch, and a content of EPDM and/or EPM of 1 to 5% by weight with respect to the binder proportion.

4. Synthetic resin sheet or panel according to claim 3, characterized in that such a polypropylene is used which raises the tackiness temperature of the total batch to a temperature of > 160°C and especially > 190°C.

5. Synthetic resin sheet or panel according to claim 4, characterized in that the binder consists of
a) 70 - 85% by weight of EVA,
b) 10 - 28% by weight of PP,
c) 1 - 5% by weight of EPDM and
d) O - 5% by weight of PE
- in total 100% by weight -
and the total batch consists of
I) 25 - 35% by weight of binder,
II) 61 - 74% by weight of filler,
III) O - 2% by weight of antistat,
IV) 0.1 - 2% by weight of colorant,
V) 0 - 0.5% by weight of antioxidant
- in total 100% by weight.

6. Synthetic resin sheet or panel according to one of claims 1 to 5, characterized in that the vinyl acetate content is 14 to 45% by weight of the EVA proportion.

7. Process for the production of multicolor-structured, homogeneous synthetic resin sheets or panels according to claim 1 wherein several, in each case unicolor-dyed batches based on thermoplastic synthetic resins are processed into granulates or chips having different colors each, these granulates or chips being mixed together and -- optionally after additional process steps -- being press molded into the synthetic resin sheets or panels, characterized in that the individual, mutually differently colored granulates or chips are obtained by uniform mixing, preceding, simultaneous, or subsequent complete plastifying, and subsequent granulation or comminution of a batch containing
- 20 - 65% by weight of a binder which contains ethylene-vinyl acetate copolymer and an olefin homopolymer,
- 30 - 80% by weight of fillers and optionally auxiliary agents and
- up to 5% by weight of a colorant component,
wherein the vinyl acetate proportion of the total batch is 3 to 14% by weight and the olefin homopolymer proportion in the total batch is 2 to 15% by weight.

8. Process according to claim 7, characterized in that the batches, containing binder, filler and a colorant component, are completely plastified and mixed on a rolling mill and are subsequently comminuted to the individual, mutually differently colored chips.

9. Process according to claim 7, characterized in that the batches of binder, fillers and the colorant component are uniformly mixed by means of a mixing device at a temperature below the softening temperature of the binders utilized and are subsequently completely plastified in an extruder into the individual granulates, each of which has a different color.

10. Process according to one of claims 7 to 9, characterized in that the intermixed, mutually differently colored granulates or chips are plastified and mixed incompletely with each other by shear stress into a multicolored marbled composition, and that this multicolored marbled composition is then molded and pressed -- optionally after further process steps -- into marbleized, homogeneous synthetic resin sheets or panels.

11. Process according to one of claims 7 to 9, characterized in that the intermixed, mutually differently colored granulates or chips are, by means of an extruder, plastified and incompletely mixed by shear stress into a multicolor-marbled composition, which latter is forced through a die and granulated into inherently multicolor-marbled granulates which are subsequently -- optionally after additional process steps -- press molded into marbleized, homogeneous synthetic resin sheets or panels.

12. Process according to one of claims 7 to 9, characterized in that the intermixed, mutually differently colored granulates or chips are, by means of a rolling mill, plastified and mixed incompletely by shear stress into a multicolor-marbled rolled slab which is subsequently press molded into marbleized, homogeneous synthetic resin sheets or panels.

13. Process according to one of claims 7 to 9, characterized in that the intermixed, mutually differently colored granulates or chips are plastified on a rolling mill and, by shear stress, mixed incompletely with one another into a multicolored marbled rolled slab, and that this rolled slab is subsequently comminuted into inherently multicolor-marbled chips which are subsequently further processed into marbled, homogeneous synthetic resin sheets or panels.

14. Process according to one of claims 7 to 9, characterized in that the binder contains at least 50% by weight of ethylene-vinyl acetate copolymer.

15. Process according to one of claims 7 to 9, characterized in that chalk and/or kaolin is used as the filler.

16. Process according to claim 11, characterized in that the multicolor-marbled granulates are press molded by means of a knurled roll mill into the marbleized, homogeneous synthetic resin sheets.

17. Process according to claim 11, characterized in that the multicolor-marbled granulates are press molded by means of a twin belt press into the marbleized, homogeneous synthetic resin sheets.

18. Process according to claim 13, characterized in that the multicolor-marbled chips are press molded by means of a knurled roll mill into the marbleized, homogeneous synthetic resin sheets.

19. Process according to claim 13, characterized in that the multicolor-marbled chips are press molded by means of a twin belt press into the marbleized, homogeneous synthetic resin sheets.

## Revendications

1. Bande ou plaque de matière synthétique homogène à structure polychrome, sans plastifiant, à base de copolymère éthylène-acétate de vinyle ainsi que d'homopolymère oléfinique en tant qu'agent liant polymère et contenant des matières de remplissage et éventuellement des adjuvants, dans laquelle la proportion d'acétate de vinyle dans la composition totale de la bande ou plaque de matière synthétique est de 3 à 14 % en poids, la proportion d'homopolymère oléfinique dans la composition totale est de 2 à 15 % en poids, et la proportion des matières de remplissage, y compris les adjuvants, est de 35 à 80 % en poids de la composition totale.

2. Bande ou plaque synthétique selon la revendication 1, **caractérisée** en ce qu'elle contient, comme homopolymère oléfinique, un polypropylène (PP) et/ou un polyéthylène (PE).

3. Bande ou plaque synthétique selon la revendication 2, **caractérisée** par une teneur en polypropylène de 2 à 15 % en poids, par rapport à la composition totale, ainsi que par une teneur en EPDM et/ou EPM de 1 à 5 % en poids, par rapport à la fraction d'agent liant.

4. Bande ou plaque synthétique selon la revendication 3, **caractérisée** en ce qu'on utilise un polypropylène qui élève la température de collage de la composition totale au-dessus de 160°C et en particulier au-dessus de 190°C.

5. Bande ou plaque synthétique selon la revendication 4, **caractérisée** en ce que l'agent liant est constitué de :
a) 70 à 85 % en poids de EAV,
b) 10 à 28 % en poids de PP,
c) 1 à 5 % en poids de EPDM, et
d) 0 à 5 % en poids de PE,
l'ensemble faisant un total de 100 % en poids, et la composition totale est constituée de :
I) 25 à 35 % en poids d'agent liant,
II) 61 à 74 % en poids de matière de remplissage,
III) 0 à 2 % en poids d'agent antistatique,
VI) 0,1 à 2 % en poids de colorant,
V) 0 à 0,5 % en poids d'antioxydant,
l'ensemble faisant un total de 100 % en poids.

6. Bande ou plaque synthétique selon l'une des revendications 1 à 5, **caractérisée** en ce que la teneur en acétate de vinyle représente de 14 à 45 % en poids de la fraction de EAV.

7. Procédé de fabrication de bandes ou plaques de matière synthétique homogènes à structure polychrome selon la revendication 1, dans lequel on transforme plusieurs compositions teintées chacune de manière monochrome, à base de matières thermoplastiques, en granulés ou pastilles de couleurs différentes des uns aux autres, que l'on mélange et qu'ensuite, éventuellement à l'issue d'opérations complémentaires, on presse en bandes ou plaques synthétiques, **caractérisé** en ce qu'on réalise les granulés ou pastilles de couleurs différentes par mélange homogène, plastification complète préalable, simultanée ou ultérieure, et ensuite granulation ou concassage, d'une composition contenant :
- de 20 à 65 % en poids d'un agent liant qui contient un copolymère éthylène-acétate de vinyle, et un homopolymère oléfinique,
- de 35 à 80 % en poids de matières de remplissage ainsi qu'éventuellement d'adjuvants et
- jusqu'à 5 % en poids de colorant,
a proportion d'acétate de vinyle de la composition totale étant de 3 à 14 % en poids, et la proportion d'homopolymère oléfinique dans la composition totale étant de 2 à 15 % en poids.

8. Procédé selon la revendication 7, **caractérisé** en ce que les compositions contenant des agents liants, des matières de remplissage et un colorant sont entièrement plastifiées sur un laminoir et mélangées, puis concassées en pastilles individualisées de couleurs différentes des unes aux autres.

9. Procédé selon la revendication 7, **caractérisé** en ce que les compositions constituées d'agents liants, de matières de remplissage et de colorants sont mélangées de manière homogène au moyen d'un malaxeur à une température inférieure à la température de ramollissement des agents liants mis en oeuvre, puis sont entièrement plastifiées dans une extrudeuse pour être transformées en granulés individualisés de couleurs différentes des uns aux autres.

10. Procédé selon l'une des revendications 7 à 9, **caractérisé** en ce que les granulés ou pastilles mélangés ensemble et de couleurs différentes des uns aux autres sont plastifiés, puis mélangés ensemble de manière incomplète par sollicitation de cisaillement pour être transformés en une masse polychrome marbrée, et en ce que cette masse polychrome marbrée est ensuite moulée, éventuellement à l'issue d'opérations complémentaires, et pressée en bandes ou plaques synthétiques homogènes marbrées.

11. Procédé selon l'une des revendications 7 à 9, **caractérisé** en ce que les granulés ou pastilles mélangés ensemble et de couleurs différentes des uns aux autres sont plastifiés au moyen d'une extrudeuse et mélangés ensemble de manière incomplète par sollicitation de cisaillement pour être transformés en une masse polychrome marbrée, que l'on force à passer à travers une filière et qu'on réduit en granulés polychromes marbrés qui, éventuellement à l'issue d'opérations complémentaires, sont pressés en bandes ou plaques synthétiques homogènes marbrées.

12. Procédé selon l'une des revendications 7 à 9, **caractérisé** en ce que les granulés ou pastilles mélangés ensemble et de couleurs différentes des uns aux autres sont plastifiés sur un laminoir et mélangés ensemble de manière incomplète par sollicitation de cisaillement, pour être transformés en une nappe laminée polychrome et marbrée qui est ensuite pressée en bandes ou plaques synthétiques homogènes marbrées.

13. Procédé selon l'une des revendications 7 à 9, **caractérisé** en ce que les granulés ou pastilles mélangés ensemble et de couleurs différentes des uns aux autres sont plastifiés sur un laminoir et mélangés ensemble de manière incomplète par sollicitation de cisaillement, pour être transformés en une nappe laminée polychrome et marbrée, et en ce que cette nappe laminée est ensuite réduite en pastilles polychromes marbrées que l'on transforme ensuite en bandes ou plaques synthétiques homogènes marbrées.

14. Procédé selon l'une des revendications 7 à 9, **caractérisé** en ce que l'agent liant contient au moins 50 % en poids de copolymère éthylène-acétate de vinyle.

15. Procédé selon l'une des revendications 7 à 9, **caractérisé** en ce qu'on met en oeuvre comme matière de remplissage de la craie et/ou du kaolin.

16. Procédé selon la revendication 11, **caractérisé** en ce que les granulés polychromes marbrés sont pressés au moyen d'un laminoir moleté pour être transformés en bandes synthétiques homogènes marbrées.

17. Procédé selon la revendication 11, **caractérisé** en ce que les granulés polychromes marbrés sont pressés au moyen d'une presse à double bande pour être transformés en bandes synthétiques homogènes marbrées.

18. Procédé selon la revendication 13, **caractérisé** en ce que les pastilles polychromes marbrées sont pressées au moyen d'un laminoir moleté pour être transformées en bandes synthétiques homogènes marbrées.

19. Procédé selon la revendication 13, **caractérisé** en ce que les pastilles polychromes marbrées sont pressées au moyen d'une presse à double bande pour être transformées en bandes synthétiques homogènes marbrées.
